# EUROPEAN PATENT APPLICATION

(11) **EP 2 192 493 A1**
(43) Date of publication of application: **02.06.2010**
(21) Application number: 08305863.6
(22) Date of filing: 28.11.2008
(51) Int. Cl.: G06F 12/12

(54) **Method of paging on demand for virtual memory management in a processing system, and corresponding processing system**

(71) Applicant: ST Wireless SA, 1228 Genève (CH)
(72) Inventor: Grandin, Emmanuel, 72300 Parce sur Sarthe (FR); Pallardy, Loic, 72700 Rouillon (FR)
(74) Representative: Zapalowicz, Francis

(57) **Abstract**

The method of paging on demand for virtual memory management in a processing system comprises page replacement managing (22) when a memory page is to be paged out of a first memory (MM1) and replaced by another memory page to be accessed by a processing unit of said processing system. Said method further comprises defining (20) within said first memory (MM1) several memory areas configured to store several memory page sets having different characteristics and respectively including at least one memory page and page replacement managing (22) comprises selecting (220) a specific page replacement algorithm for each memory area depending at least on characteristics of said memory page set associated with said memory area and using (221) said selected page replacement algorithm for performing said paging out and page replacing in the corresponding memory area.

## Description

The invention relates to memory management in a processing system, for example a computer operating system, and more particularly to paging on demand for virtual memory management in a processing system.

The invention can be applied in any system using a virtual memory paging mechanism, for example but in a non limitative way, in a wireless communication apparatus, as for example a mobile phone.

In a processing system that utilizes paging for virtual memory management, page replacement algorithms decide which memory pages to page out (for example, discard if it is a read-only page, else swap out i.e. write to disk) when a page of memory needs to be allocated. Paging happens when a page fault occurs and a free page cannot be used to satisfy the allocation, either because there are none or because the number of free pages is lower than some threshold.

Paging on demand, as opposed to loading all pages immediately, presents the following advantages:
- Does not load the pages that are never accessed, so saves the memory for other programs and increases the degree of multiprogramming.
- Less loading latency at the program startup.
- Less of initial disk overhead because of fewer page reads.
- Does not need extra hardware support than what paging needs, since protection fault can be used to get page fault.

Advantages over non-virtual memory systems are the following ones:
- Pages will be shared by multiple programs until they are modified by one of them, so a technique called copy on write will be used to save more resources; this applies only to pages which are not read-only (i.e. they can be modified).
- Ability to run large programs on the machine, even though it does not have sufficient memory to run the program. This method is easier for a programmer than old manual overlays.

US 7 103 748 discloses a method of improving virtual memory management by preventing a subset of address translation information from being replaced with other types of address translation information in a cash memory reserved for storing such address translation information for faster access by a central processing unit.

According to an embodiment, it is proposed a method of paging on demand for virtual memory management in a processing system and a corresponding processing system allowing an improvement on paging on demand by using another solution.

According to an embodiment, it is proposed to use a different page replacement algorithm per memory pages set or memory area, allowing optimizing the page replacement strategy according to the characteristics (degree of locality, access scheme, etc....) of each of these memory page sets.

A method of paging on demand and a corresponding processing system are proposed in which a different physical/virtual pages number ratio is used for each memory pages set along with a different page replacement algorithm fitting with this ratio.

According to an aspect, a method of paging on demand for virtual memory management in a processing system is proposed, comprising page replacement managing when a memory page is to be paged out of a first memory and replaced by another memory page to be accessed by a processing unit of said processing system.

According to a general feature of this aspect, said method further comprises defining within said first memory several memory areas configured to store several memory page sets having different characteristics and respectively including at least one memory page and page replacement managing comprises selecting a specific page replacement algorithm for each memory area depending at least on characteristics of said memory page set associated with said memory area and using said selected page replacement algorithm for performing said paging out and page replacing in the corresponding memory area.

Associating a specific page replacement algorithm for each memory area depending at least on characteristics of the memory page set associated with said memory area, permits in particular to improve efficiency of the page replacement strategy.

As a matter of fact, a single page replacement algorithm might not fit the characteristics (degree of locality, access scheme, etc...) of any of such memory pages sets.

The same algorithm (e.g. LRU) might be very efficient for a part of highly localized code (e.g. Linux kernel) but might have poor performances for highly referenced and fragmented code or for an image database.

The numbers of different page replacement algorithms may be different from the numbers of memory areas. As a matter of fact, some memory areas may be associated to the same replacement algorithm if this algorithm is considered as being the most efficient, taking into account the characteristics of the corresponding memory pages sets to be stored in these memory areas.

Said characteristics of a memory page set may include the type of information contained in said memory page set.

This type of information may include for example a code containing executable instructions or not code, i.e. not executable instructions.

When said type of information stored in a memory page set includes a code, said characteristics of said memory page set may further include a degree of locality of said code.

When said type of information stored in a memory page set includes not executable instructions, said characteristics of said memory page set further include, for example, the structure of such not executable instructions and the way they are used.

The association of one replacement algorithm to one memory area (one memory page set) may need a fairly complete knowledge of the system, for example of the hardware, the operating system, and the application framework.

And, defining a memory area in which a particular memory page set will be stored, may take into account a physical/virtual pages number ratio for this memory area. Thus, it would be possible to improve the efficiency of the page replacement algorithm associated with this memory area by adjusting the physical/virtual pages number ratio for the memory area.

The replacement algorithm choices or design may depend also, in combination with or independently of the above mentioned characteristics, on one or several system parameters like, for example, on a latency information.

According to an embodiment, said page replacement managing may further comprise pre-paging, for example, in a system where the latency to access storage is high for the first access, but lower for subsequent access (also known as "burst mode").

According to another aspect, a processing system utilizing paging on demand for virtual memory management is proposed, comprising a processing unit, first memory means for storing memory pages to be accessed by said processing unit, second memory means for saving inactive memory pages and memory management means for managing page replacement when a memory page is to be paged out from said first memory means and to be replaced by another memory page to be accessed by said processing unit and saved in said second memory means.

According to general feature of this aspect, said first memory means comprises several memory areas configured to store several memory page sets having different characteristics and respectively including at least one memory page and said memory management means comprises third memory means configured to store several different page replacement algorithms respectively associated to said different memory page sets characteristics and a memory management unit configured to select the page replacement algorithm to be used in a memory area for paging out a memory page stored in said memory area depending on the characteristics of the memory page set associated to said memory area.

According to an embodiment, said memory management unit may comprise pre-paging means configured to perform pre-paging.

According to another aspect, a wireless communication apparatus is proposed, comprising a processing system as defined above.

Other advantages and features of the invention will appear on examining the detailed description of embodiments, these being in no way limiting and of the appended drawings in which:
- figure 1 illustrates diagrammatically an embodiment of a processing system according to the invention;
- figure 2 illustrates an embodiment of a method according to the invention;
- figure 3 illustrates another embodiment of a particular state of an embodiment of a method according to the invention ; and
- figure 4 illustrates diagrammatically a wireless communication apparatus incorporating an embodiment of a processing system according to the invention.

In the drawings, like numbers refer to like objects throughout. Objects in the diagrams are not necessarily drawn to scale.

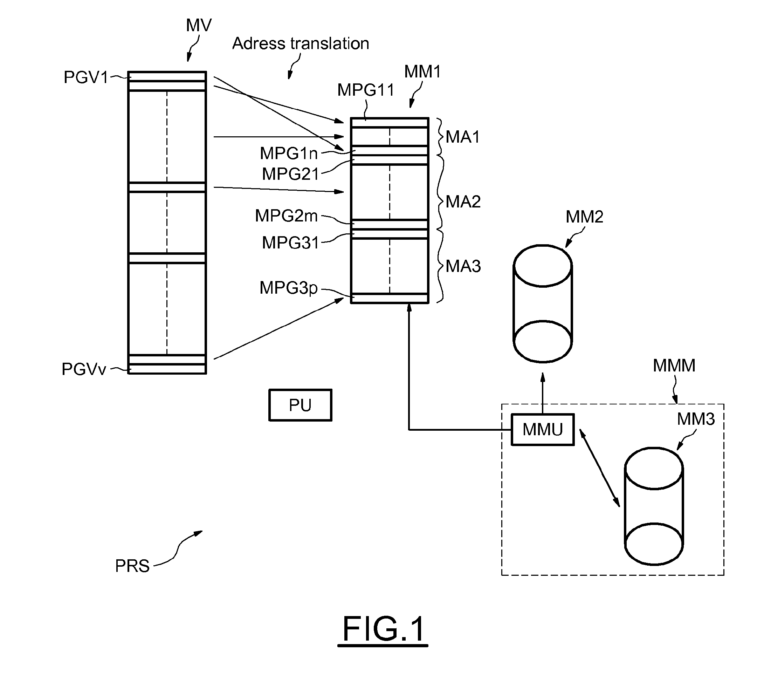

Referring now to figure 1, the reference sign PRS designates a processing system utilizing paging on demand for virtual memory management.

This processing system comprises a processing unit PU, for example a microprocessor, first memory means MM1, for example a RAM memory, for storing memory pages to be accessed by the processing unit PU.

The processing system further comprises second memory means, for example a hard disk or a flash memory, for saving inactive memory pages.

Further, memory management means MMM are provided for managing page replacements when a memory page is to be paged out from said first memory means MM1 and to be replaced by another memory page to be accessed by the said processing unit PU and saved into said second memory means MM2.

Virtual memory is a computer system technique used in combination with paging mechanism, and both virtual memory and paging are well known by the man skilled in the art.

More precisely, the virtual memory MV comprises pages PGV1-PGVv. The memory addresses delivered by the processing unit are virtual addresses indicating the position of a word in the virtual memory.

The virtual size of the virtual memory is bigger than the size of the first memory means MM1 so that the application seams it has a large range of contiguous addresses, but in reality the parts it is currently using are scattered around first memory means MM1, and the inactive parts are saved in the second memory means MM2.

In other words, the virtual memory enables programs to use virtual address ranges which in total exceed the amount of real memory MM1.

Generally speaking, almost all implementations use page tables to translate the virtual addresses seen by the application program into physical addresses (also referred to as "real addresses"), used by the processing unit to access to the first memory means MM1 for processing instructions.

For example, a virtual address is translated into a real or physical address using page table entries stored in a page table, and a table-look aside buffer (not shown). The virtual address includes for example a virtual page number and a page offset. The real address includes a page frame number and a page offset. Preferably, only the virtual page number of a virtual address is translated into the page frame number of the real address, while the page offset is copied to the page offset without modification.

This translation between virtual addresses and real addresses may be for example performed by the memory management unit MMU.

Paging is the process of saving inactive virtual memory pages to second memory MM2 and restoring them to real memory MM1 when required.

More precisely, when the processing unit PU fetches an instruction located at a particular virtual address or, while executing an instruction, fetches data from a specific virtual address or stores data in a particular virtual address, the virtual address is translated to the corresponding physical address. The memory management unit which thus looks up the real address from the page table corresponding to the virtual address, passes the real address to the processing unit PU which executes instructions. If the page tables indicate that the virtual memory page is not currently in the real memory MM1, the memory management unit raises a special internal signal which is generally named a "page fault exception". In such a case, a page replacement algorithm is used for paging out of the first memory means MM1 a memory page and replacing it by the requested memory page to be accessed by the processing unit and which is stored in the memory means MM2.

According to an aspect of the invention, the first memory MM1 comprises several memory areas MAi. In figure 1, for simplification reasons, the first memory MM1 is partitioned in only three memory areas MA1, MA2, MA3.

Each memory area is configured to store a set of memory pages including at least one memory page.

For example, in figure 1, the memory area MA1 is configured to store n memory pages MPG11-MPG1n whereas memory area MA2 is configured to store m memory pages MPG21-MPG2m, and memory area MA3 is configured to store p memory pages MPG31-MPG3p. The numbers n, m and p may be equal or different.

Each set of memory pages has a specific characteristic and the characteristics of these sets are different.

For example, as it will be explained more in details thereafter, a first memory area may be configured to store a certain type of code whereas the second memory area may be adapted to store another type of code, and the third memory area may be adapted to store data i.e. not executable instructions.

And, a specific page replacement algorithm is associated to each memory area, depending on characteristics of the memory page set associated with the memory area.

All the page replacement algorithms may be respectively different for all the memory areas. However, in some cases, depending on the characteristics of the memory page set, a same page replacement algorithm may be used for two or more different memory areas.

Associating a specific page replacement algorithm with each memory area permits to improve the efficiency of the paging mechanism.

These specific page replacement algorithms are for example stored in third memory means MM3 (figure 1) and, for performing a paging mechanism on a specific memory area MAi of the memory means MM1, the memory management unit MMU will select among the list of possible page replacement algorithms stored in memory MM3, the specific page replacement algorithm associated to this memory area.

Although third memory means MM3 have been represented outside of the first memory MM1, third memory means MM3 and the first memory MM1 could also be together included in a same RAM memory.

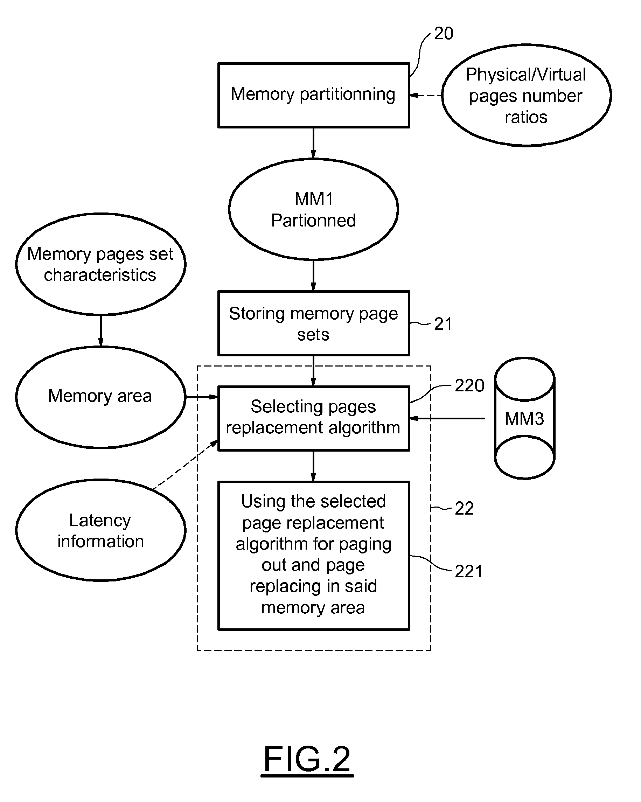

A method of paging according to another aspect of the invention is illustrated in figure 2. After having performed for example a memory partition (step 20), the memory page sets are stored in the memory areas (step 21) depending on their characteristics.

The page replacement managing 22 comprises thus, for each memory area, selecting page replacement algorithm 220 and using the selected page replacement algorithm for paging out and page replacing in said memory area (step 221).

There are a variety of page replacement algorithms well known by the man skilled in the art.

Examples of page replacement algorithm are given there below in a non limitative way.

The theoretically optimal page replacement algorithm (also known as OPT or clairvoyant replacement algorithm, or Belady's optimal page replacement policy) is an algorithm that works as follows: when a page needs to be swapped in, the memory management unit swaps out the page whose next use will occur farthest in the future.

The not recently used (NRU) page replacement algorithm is an algorithm that favours keeping pages in memory that have been recently used. This algorithm works on the following principle: when a page is referenced, a referenced bit is set for that page, marking it as referenced. Similarly, when a page is modified (written to), a modified bit is set. The setting of the bits is usually done by the hardware, although it is possible to do so on the software level as well.

At a certain fixed time interval, the clock interrupt triggers and clears the referenced bit of all the pages, so only pages referenced within the current clock interval are marked with a referenced bit. When a page needs to be replaced, the operating system divides the pages into four classes:
- Class 0: not referenced, not modified
- Class 1: not referenced, modified
- Class 2: referenced, not modified
- Class 3: referenced, modified.

Although it does not seem possible for a page to be not referenced yet modified, this happens when a category 3 page has its referenced bit cleared by the clock interrupt. The NRU algorithm picks a random page from the lowest category for removal.

The first-in, first-out (FIFO) page replacement algorithm is a low-overhead algorithm that requires little book-keeping on the part of the operating system. The idea is obvious from the name - the operating system keeps track of all the pages in memory in a queue, with the most recent arrival at the back, and the earliest arrival in front. When a page needs to be replaced, the page at the front of the queue (the oldest page) is selected.

A modified form of the FIFO page replacement algorithm, known as the Second-chance page replacement algorithm, fares relatively better than FIFO at little cost for the improvement. It works by looking at the front of the queue as FIFO does, but instead of immediately paging out that page, it checks to see if its referenced bit is set. If it is not set, the page is swapped out. Otherwise, the referenced bit is cleared, the page is inserted at the back of the queue (as if it were a new page) and this process is repeated. This can also be thought of as a circular queue. If all the pages have their referenced bit set, on the second encounter of the first page in the list, that page will be swapped out, as it now has its referenced bit cleared.

As its name suggests, Second-chance gives every page a "second-chance" - an old page that has been referenced is probably in use, and should not be swapped out over a new page that has not been referenced.

The algorithm named "Clock" is a more efficient version of FIFO than Second-chance because pages don't have to be constantly pushed to the back of the list, but it performs the same general function as Second-Chance. The clock algorithm keeps a circular list of pages in memory, with the "hand" (iterator) pointing to the oldest page in the list. When a page fault occurs and no empty frames exist, then the R (referenced) bit is inspected at the hand's location. If R is 0, the new page is put in place of the page the "hand" points to, otherwise the R bit is cleared. Then, the clock hand is incremented and the process is repeated until a page is replaced.

The least recently used page (LRU) replacement algorithm, though similar in name to NRU, differs in the fact that LRU keeps track of page usage over a short period of time, while NRU just looks at the usage in the last clock interval. LRU works on the idea that pages that have been most heavily used in the past few instructions are most likely to be used heavily in the next few instructions too.

One important advantage of LRU algorithm is that it is amenable to full statistical analysis. It has been proved, for example, that LRU can never result in more than N-times more page faults than OPT algorithm, where N is proportional to the number of pages in the managed pool.

There are also variants on LRU named, for example, LRU-K. LRU-K improves greatly on LRU with regard to locality in time. It's also known as LRU-2, for the case that K=2.

The so-called random replacement algorithm replaces a random page in memory. This eliminates the overhead cost of tracking page references. Usually it fares better than FIFO, and for looping memory references it is better than LRU, although generally LRU performs better in practice.

The not frequently used (NFU) page replacement algorithm requires a counter, and every page has one counter of its own which is initially set to 0. At each clock interval, all pages that have been referenced within that interval will have their counter incremented by 1. In effect, the counters keep track of how frequently a page has been used. Thus, the page with the lowest counter can be swapped out when necessary.

The not frequently used page-replacement algorithm generates fewer page faults than the least recently used page replacement algorithm when the page table contains null pointer values.

According to an embodiment, each memory addresses range, i.e. each memory area or each set of memory pages may be identified by a specific identifier. It is thus possible to add to this specific identifier a page replacement algorithm identifier. Thus, after having found which memory area to be used, the page replacement algorithm identifier corresponding to this memory area is read, and, for example, may serve as an entry point in a table or a function to invoke the corresponding page replacement algorithm.

Another possibility could directly replace the page replacement algorithm identifier by a function pointer redirecting to the very same replacement algorithm function.

Another implementation could be directly made through a modification of the existing hardware in order to include for each virtual memory page, the page replacement algorithm identifier, thus avoiding the need of searching for which page replacement algorithm identifier this page is assigned to.

The choice of the optimal page replacement algorithm to use for each memory area can be done in several ways. For example, it can be determine by the compiler/linker after the use of example of a code/reference/locality analysis tool on each compilation item. The man skilled in the art can refer for example to the Wisconsin University Technical report 1338, February 1997, of Gideon Glass and Pei Cao: "Adaptive Page Replacement Based on Memory Reference Behavior".

The choice can also be determined by run-time software according to run-time measurements.

As indicated above, the page replacement algorithm is chosen in particular according to the characteristics of the set of memory pages. Such characteristics may include, for example, the type of information stored in the memory pages, for example, executable instructions (code) or not executable instructions (data).

Among the executable instructions fetched by the processing unit, another criteria for choosing the page replacement algorithm may be the degree of locality, which has a direct impact on the number of pages that might be loaded from the storage into the memory during the execution of these instructions. More precisely, spatial locality is the tendency of such code to provoke accesses to memory addresses near other recently accessed addresses, and temporal locality is the tendency of such code to reference the same memory addresses that it referenced recently.

For example, a definition of a degree of locality of a code is, starting from a first instructions acceding to a memory page, the number of accesses to this page during the 100 following instructions.

And, if this percentage is for example greater than 75, the code is considered as being highly localized, whereas it is considered as being weekly localized if this percentage is for example smaller than 25. However these values are only examples and can be different depending on the application. The man skilled in the art will be able to define such values depending on the application.

Concerning data, for example text, prompts, dictionaries, icons, images, sounds, etc., can be organized in different ways in the storage media (for example hard disk) and each item can be stored in a contiguous manner or in a fragmented manner.

The choice of the associated page replacement algorithm will depend for example on how such data is organized and used.

More generally, the association of one replacement algorithm to one page memory area needs preferably a fairly complete knowledge of the system (hardware, operating system, application framework). The man skilled in the art will be able to choose the most appropriate page replacement algorithm for each memory area depending on the system.

Further to taking into account the characteristics of the set of memory pages for selecting the best appropriate page replacement algorithm, another feature may be used for improving again the efficiency of the paging mechanism. More precisely, the definition, i.e. the size of each memory area in the partitioning step, may be optimized by using a physical/virtual pages number ratio for this memory area, taking into account the chosen algorithm.

In other words, the combination of a particular page replacement algorithm together with a particular physical/virtual pages number ratio leads to a more efficient paging mechanism, i.e. a better compromise between the paging performance (number of page fault exceptions) and the size of the memory MM1.

The physical/virtual pages number ratio is a ratio between the number of physical pages within a memory area of the memory MM1 and the number of virtual pages used by the processing unit for this particular application.

The replacement algorithm choices or design may depend also on several system parameters like, for example, on a latency information.

More precisely, these several system parameters may include, in a non limitative way,
- a system maximum acceptable latency because the whole system could be hold during a page replacement;
- an application maximum acceptable latency because only the application which generates the page fault could be hold during page replacement management;
- a storage access time because the time to load page from physical support to memory page has a big impact on the way of managing the page fault event;
- a relation between the paged code and the rest of the system to determine consequences of page replacement treatment.

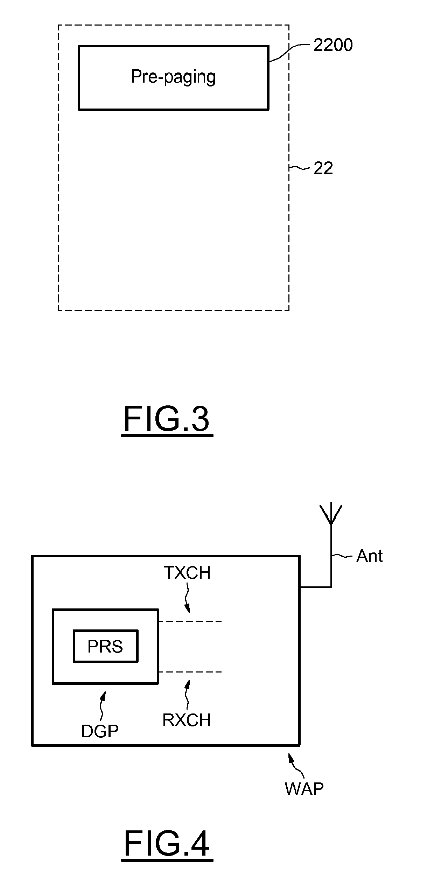

It is also possible to use, in some cases, pre-paging (fig.3, step 2200). Such technique consists when a processor requests a particular memory page, in loading further memory pages which will be surely used by the processor. This is the case for example, when an icon is stored within five memory pages. When the processing unit requests the first memory page of the icon, it will also request subsequently the other pages. In such a case, pre-paging consists in also loading the four pages following the first one.

Now, some particular examples will be given.

A weakly localized code (e.g. resulting from object-oriented implementation) benefits preferably from a page replacement algorithm which is good for "non specific" applications, for example LRU-K or WSClock. In this case the physical/virtual pages number ratio should also be preferably quite high, because numerous pages can be in use at the same time.

For example, a physical/virtual page number ratio greater than 0,5 or 0,66 would be good.

A highly localized code (e.g. multimedia codec with compact loops on streaming data) only needs, for example, a simple page replacement algorithm like FIFO, as soon as the physical/virtual pages number ratio allows the biggest code loop to fit into the physical memory pages set: once this loop is loaded, it will stay here until the next loop is loaded, etc.

In the same manner, a code executing parallel, compact operations should have preferably a physical/virtual pages number ratio allowing the parallel operations to run concurrently without thrashing (one operation replacing the pages of the other, and vice versa).

Pre-paging techniques can also be used, especially in system where the latency to access storage is high for the first access, but lower for subsequent access (also know as "burst mode"); in this case it can be beneficial to load several subsequent pages at the same time (valid mainly for fairly highly localized code), even if they are not always used in the end. This can lead to increase the amount of physical memory reserved for this "memory page set" in order to cope with these "possibly unused" supplementary pages, thus increasing the physical/virtual pages number ratio.

Concerning data (not executable instructions), it is possible to distinguish between items which are completely used at once or which are only partially used at once.

For items which are completely used at once (e.g. text strings or icons, or images stored in a read-only file system), as for highly localized code, a simple page replacement algorithm like FIFO associated to pre-paging is suitable, but such algorithm is slightly modified in order to be aware of the way each item is organized in order to anticipate on the next pages to be loaded according to each item size. For a fragmented item, this can be done for example by using file system's internal data structures dealing with fragmentation. This is easier for a contiguously stored item.

And the physical/virtual pages number ratio mainly depends on the maximum number of items being used at the same time (e.g. maximum 5 icons at once).

For an item which is only partially used at once, e.g. music files stored in a read-only file system (like a built-in ringer), as for highly localized code, a simple page replacement algorithm like FIFO associated to pre-paging is suitable, but again this algorithm is slightly modified in order to be aware of the way each item is organized and used in order to anticipate on the next pages to be loaded without knowing item size, but defining a "window size" smaller than the item itself. For example, for a fragmented item, this can be done by using file system's internal data structures dealing with fragmentation. This is easier for a contiguously stored item.

And the physical/virtual pages number ratio mainly depends on the maximum number of items being used at the same time (e.g. only one for a music file), and the physical memory size which is allocated for the "window" (e.g. only a 1-second-window of a music file loaded in memory, even if the music file is far longer).

It should be noted that the term "characteristics" may have a global meaning. As a matter of fact, if a part of a code is for example stored in a set of 100 memory pages associated with a specific memory area, and if among these pages only some of these include a portion of weakly localized code whereas the remaining memory pages include a highly localized code, this part of code will be considered as being a highly localized code.

The processing system PRS of figure 1 may for example be incorporated in the digital part DGP of a wireless apparatus WAP (figure 4) including an antenna ANT as well as a transmission chain TXCH and a receiving chain RXCH. Such a wireless apparatus may be for example a mobile phone.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. Method of paging on demand for virtual memory management in a processing system, comprising page replacement managing (22) when a memory page is to be paged out of a first memory (MM1) and replaced by another memory page to be accessed by a processing unit of said processing system, **characterized in that** said method further comprises defining (20) within said first memory (MM1) several memory areas configured to store several memory page sets having different characteristics and respectively including at least one memory page and page replacement managing (22) comprises selecting (220) a specific page replacement algorithm for each memory area depending at least on characteristics of said memory page set associated with said memory area and using (221) said selected page replacement algorithm for performing said paging out and page replacing in the corresponding memory area.

2. Method according to claim 1, wherein said characteristics of a memory page set include the type of information contained in said memory page set.

3. Method according to claim 2, wherein said type of information includes not executable instructions or a code containing executable instructions.

4. Method according to claim 3, wherein said type of information stored in a memory page set includes a code, and said characteristics of said memory page set further include a degree of locality of said code.

5. Method according to claim 2, wherein said type of information stored in a memory page set includes not executable instructions and said characteristics of said memory page set further include the structure of such not executable instructions and the way they are used.

6. Method according to any one of the preceding claims, wherein defining a memory area within said first memory (MM1) further comprises taking into account a physical/virtual pages number ratio for this memory area.

7. Method according to any one of the preceding claims, wherein said place replacement managing (22) further comprises pre-paging (2200).

8. Method according to any one of the preceding claims, wherein page replacement managing (22) further comprises selecting (220) a specific page replacement algorithm depending on a latency information.

9. Processing system, utilizing paging on demand for virtual memory management, comprising a processing unit (PU), first memory means (MM1) for storing memory pages to be accessed by said processing unit, second memory means (MM2) for saving inactive memory pages and memory management means (MMM) for managing page replacement when a memory page is to be paged out from said first memory means and to be replaced by another memory page to be accessed by said processing unit and saved in said second memory means, **characterized in that** said first memory means (MM1) comprises several memory areas (MAi) configured to store several memory page sets having different characteristics and respectively including at least one memory page and said memory management means (MMM) comprises third memory means (MM3) configured to store several different page replacement algorithms respectively associated to said different memory page sets characteristics and a memory management unit (MMU) configured to select the page replacement algorithm to be used in a memory area for paging out a memory page stored in said memory area depending at least on the characteristics of the memory page set associated to said memory area.

10. Processing system according to claim 9, wherein said characteristics of a memory page set include the type of information contained in said memory page set.

11. Processing system according to claim 10, wherein said type of information includes not executable instructions or a code containing executable instructions.

12. Processing system according to claim 11, wherein said type of information stored in a memory page set includes a code, and said characteristics of said memory page set further include a degree of locality of said code.

13. Processing system according to claim 10, wherein said type of information stored in a memory page set includes not executable instructions and said characteristics of said memory page set further include the structure of such not executable instructions and the way they are used.

14. Processing system according to any one of the claims 9 to 13, wherein said memory management unit comprises pre-paging means configured to perform pre-paging.

15. Wireless communication apparatus, comprising a processing system according to any one of the claims 9 to 14.
